(19) Europäisches Patentamt
European Patent Office
Office européen des brevets

(11) Numéro de publication : **0 589 750 A1**

(12) **DEMANDE DE BREVET EUROPEEN**

(21) Numéro de dépôt : **93402208.8**

(51) Int. Cl.$^5$ : **G06F 15/72**

(22) Date de dépôt : **10.09.93**

(30) Priorité : **24.09.92 FR 9211397**

(43) Date de publication de la demande : **30.03.94 Bulletin 94/13**

(84) Etats contractants désignés : **BE DE DK ES GB GR IE IT LU NL PT**

(71) Demandeur : **KREON INDUSTRIE, Société Anonyme
Rue Nicolas Appert, ZI Nord
F-87200 Limoges (FR)**

(72) Inventeur : **Cosnard, Eric
Cidex 4107
F-31180 Lapeyrouse Fossat (FR)**

(74) Mandataire : **Lepercque, Jean et al
c/o Cabinet Claude Rodhain SA, 30 Rue la Boétie
F-75008 Paris (FR)**

(54) **Procédé de traitement de données infographiques 3D, en particulier pour facettisation, segmentation et tri d'ensembles de points représentatifs de surfaces ou courbes.**

(57) On traite des données infographiques obtenues après acquisition d'une surface 3D (ou d'une courbe 2D ou 3D). Ces données, représentatives de points de la surface (ou de la courbe), constituent un ensemble non ordonné et indéterminé du point de vue analytique. On cherche à regrouper topologiquement les points en une pluralité de facettes (ou segments) distinctes, déterminées du point de vue analytique et répondant chacune à au moins un critère prédéterminé.

FIG_7

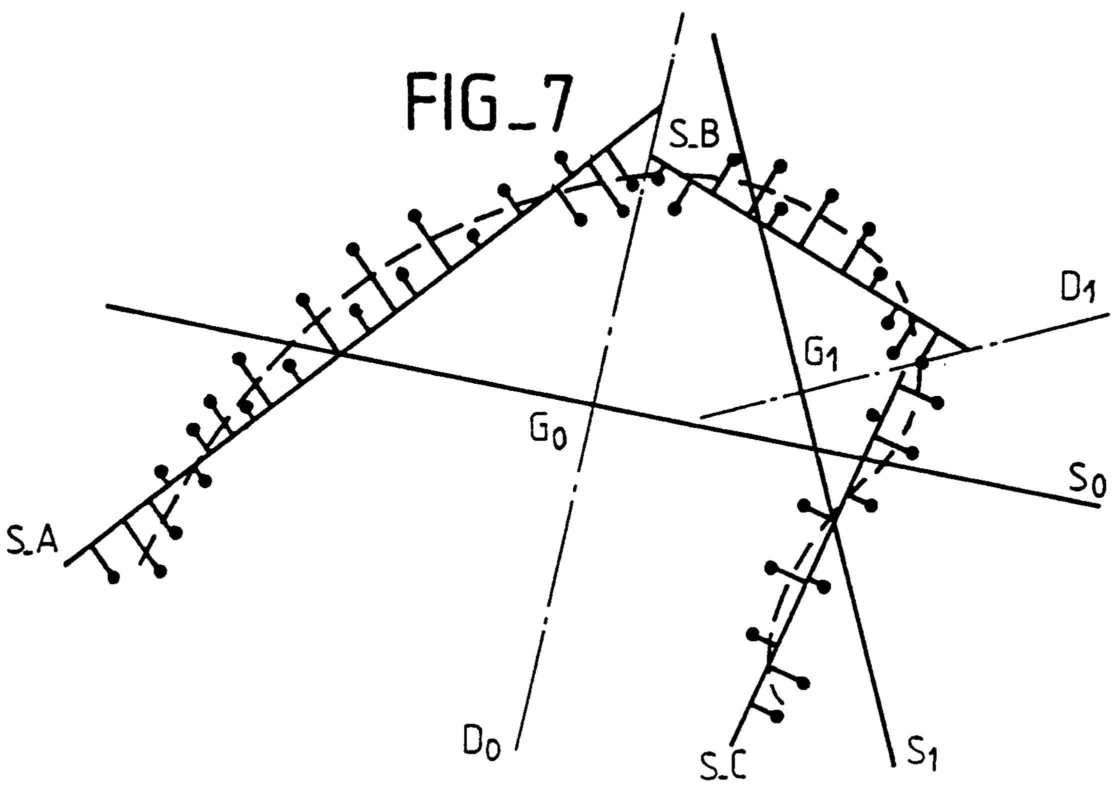




Jouve, 18, rue Saint-Denis, 75001 PARIS

L'invention concerne le traitement des données infographiques tridimensionnelles, notamment le traitement de données obtenues par un système d'acquisition sans contact de formes tridimensionnelles.

L'invention s'applique en particulier au traitement des données brutes délivrées par un capteur optique opérant avec une source de rayonnement laser et une ou plusieurs caméras analysant la trace formée par le faisceau laser sur une pièce gauche quelconque dont on souhaite numériser la forme.

Une telle technique d'acquisition est décrite en détail, notamment dans les FR-A-2 627 047, FR-A-2 642 833 et FR-A-2 629 198 ainsi que dans la demande française 91-16305 du 30.12.91, titres qui appartiennent tous à la demanderesse.

Cette étape d'acquisition produit un fichier numérique de points qui peut être de très grande dimension : ainsi, pour une surface de 1 m2 avec une résolution de 1 point par millimètre, ou une surface de 1 dm2 avec une résolution de 10 points par millimètre, on aboutit à un fichier de 1 million de points.

L'invention s'intéresse au traitement des données brutes de ce fichier de points, en recherchant une exploitation suffisamment performante pour accéder rapidement à la forme numérisée dans le but soit d'afficher celle-ci sur un écran, soit de traiter cette forme ou de la transmettre à un système en aval, par exemple un système de CAO ou une machine-outil à commande numérique.

Les différentes étapes que l'on doit mettre en oeuvre à cet effet sont, essentiellement, les suivantes :

- tout d'abord, la "facettisation", c'est-à-dire le regroupement topologique des points en sous-ensembles (par exemple des fractions de surfaces planes ou "facettes") répondant chacune à un certain nombre de critères prédéterminés, notamment géométriques, que l'on exposera par la suite : on passe ainsi d'un nuage de points indéterminé sur le plan analytique à un ensemble de facettes définies chacune par une équation de plan et constituant une modélisation de la surface dont on a acquis la forme ;
- dans le cas où la forme considérée n'est pas une surface tridimensionnelle mais une courbe bidimensionnelle (par exemple une section plane) ou tridimensionnelle (courbe gauche), on doit procéder à une "segmentation", qui est une opération similaire à la facettisation sauf que, au lieu d'approximer une surface par un ensemble de facettes planes, on approxime une courbe par un ensemble de segments de droite ;
- après segmentation, il est en outre nécessaire, par exemple lorsque l'on souhaite guider un outil d'usinage, de procéder à une étape supplémentaire de "tri", consistant à établir une relation d'ordre entre les différents points de la courbe : en effet, si ceux-ci sont connexes dans l'espace, ils ne le sont pas dans le fichier après exécution de la segmentation.

Diverses méthodes ont été proposées pour exécuter ces traitements, mais elles se heurtent le plus souvent à deux difficultés essentielles.

En premier lieu, dès que le volume de données (nombre de points à traiter) devient important, les traitements connus conduisent très rapidement à des temps de traitement excessifs (plusieurs heures ou dizaines d'heures), notamment si l'on exécute ces traitements sur des micro-ordinateurs, dont la puissance de calcul et les capacités de stockage sont limitées. Les méthodes actuelles ne sont donc appliquées en général qu'à la modélisation de formes simples ou de petites dimensions, ou acquises avec une faible résolution.

En second lieu, les méthodes jusqu'à présent proposées sont pour la plupart des méthodes locales, c'est-à-dire des méthodes qui, à partir d'un point donné, traitent de proche en proche les points voisins pour tenter de constituer les facettes. Mais en pratique, ces méthodes locales se révèlent peu satisfaisantes lorsque les formes à modéliser comportent des points singuliers tels que des arêtes vives, des points anguleux, etc.

De façon générale, le problème abordé par l'invention consiste à générer, indexer, accéder et traiter une structure de données contenant le relevé d'une forme tridimensionnelle stockées sous forme d'un fichier de coordonnées de points. à partir de ce nuage de points indifférencié sur le plan analytique, il s'agit d'établir des relations de voisinage topologique entre ces points sur une surface ou d'ordre sur une courbe, par des moyens matériels qui soient compatibles avec les performances des micro-ordinateurs actuels.

On notera en outre qu'il doit être possible d'établir ces relations de voisinage topologique sans qu'il soit besoin de connaître a priori une relation d'ordre entre les points ("nuage" de points).

L'un des buts de l'invention est de proposer un procédé algorithmique qui permette de réaliser dans ces conditions les traitements précités de facettisation, de segmentation et de tri.

On verra également que, bien que ces traitements soient principalement ceux pour lesquels a été conçu l'algorithme de l'invention, cette dernière est applicable à d'autres types de traitements, par exemple le lissage des points relevés.

Un autre but de l'invention est de proposer un procédé universel utilisant le même algorithme de base (les mêmes primitives) pour réaliser ces différentes opérations, ou même d'autres encore, la définition du traitement à effectuer se faisant par une simple modification d'une librairie de procédures.

Un autre but de l'invention est de proposer une méthode globale (et non locale) et dichotomique permettant de traiter l'ensemble du nuage de points avec le même degré de finesse, tout en concentrant la dichotomie, et donc la résolution du traitement, sur les points singuliers que la forme est susceptible de présenter.

On notera à cet égard que l'application envisagée n'est nullement limitative, et que les principes de l'invention sont transposables directement à de nombreux autres traitements (par exemple, comme on l'évoquera plus loin, le lissage de la forme) et à d'autres domaines techniques que l'imagerie tridimensionnelle, compte tenu de son universalité.

Pour atteindre les buts précités, le procédé selon l'invention, qui est un procédé de traitement de données infographiques obtenues après acquisition d'une surface 3D, ces données, représentatives de points de la surface, constituant un ensemble non ordonné et indéterminé du point de vue analytique, ce procédé consistant à regrouper topologiquement les points en une pluralité de facettes distinctes, déterminées du point de vue analytique et répondant chacune à un critère prédéterminé, est caractérisé par les étapes consistant à : (a) créer une structure de données comportant au moins, d'une part, un premier fichier contenant les données représentatives de l'ensemble des points de la surface et, d'autre part, un second fichier qui recevra les données de facette qui auront été élaborées au cours de l'exécution du procédé ; (b) régresser un plan approximant l'ensemble de points du premier fichier ; (c) examiner si ce plan régressé vérifie ledit critère prédéterminé, ce critère prédéterminé comportant au moins un critère de distance maximale de chaque point au plan régressé ; (d) dans la négative, scinder l'ensemble des points considéré en deux sous-ensembles répartis de part et d'autre d'un plan de coupure, et exécuter de façon dichotomique, itérative ou récursive les étapes (b) à (d) pour chacun de ces sous-ensembles ; (e) dans l'affirmative, créer dans le second fichier une donnée de facette, contenant les données analytiques du plan régressé correspondant.

Le critère prédéterminé peut comporter en outre un critère de nombre maximal de points de l'ensemble et/ou un critère de dimension maximale de la facette correspondant à l'ensemble de points.

Le plan de coupure peut notamment être un plan passant par le centre de gravité de l'ensemble de points à scinder et perpendiculaire au plan régressé.

Dans un mode de mise en oeuvre avantageux, dans le premier fichier, chaque donnée de point contient en outre une information de pointeur pointant sur le point suivant de la facette, de manière à permettre un chaînage en liste des points dans une zone mémoire allouable et libérable dynamiquement, les listes étant sauvegardées sous forme de fichiers temporaires en cas de saturation de ladite zone.

L'invention s'applique également au traitement de données infographiques obtenues après acquisition sans contact d'une courbe 2D ou 3D, ces données, représentatives de points de la courbe, constituant un ensemble non ordonné et indéterminé du point de vue analytique, ce procédé consistant à regrouper topologiquement les points en une pluralité de segments distincts, déterminés du point de vue analytique et répondant chacun à au moins un critère prédéterminé ; le procédé est alors caractérisé par les étapes consistant à : (a) créer une structure de données comportant au moins, d'une part, un premier fichier contenant les données représentatives de l'ensemble des points de la courbe et, d'autre part, un second fichier qui recevra les données de segment qui auront été élaborées au cours de l'exécution du procédé ; (b) régresser une droite approximant l'ensemble de points du premier fichier ; (c) examiner si cette droite régressée vérifie ledit critère prédéterminé, ce critère prédéterminé comportant au moins un critère de distance maximale de chaque point à la droite régressée ; (d) dans la négative, scinder l'ensemble des points considéré en deux sous-ensembles répartis de part et d'autre d'une coupure, et exécuter de façon itérative ou récursive les étapes (b) à (d) pour chacun de ces sous-ensembles ; (e) dans l'affirmative, créer dans le second fichier une donnée de segment, contenant les données analytiques du segment régressé correspondant.

Il peut alors être prévu une étape complémentaire consistant, après achèvement de l'ensemble des itérations des étapes (b) à (d), à : (e) trier localement les points de chaque segment suivant l'abscisse de leur projection sur ce segment, puis orienter et relier entre eux les segments pour ordonner entre eux, globalement, l'ensemble des points de la courbe.

Dans tous les cas, on peut avantageusement, à l'étape (a), créer en outre un troisième fichier indexant le premier fichier et contenant des données représentatives de granules groupant chacun une pluralité de points consécutifs du premier fichier.

<>

On va maintenant décrire un exemple de mise en oeuvre de l'invention, en référence aux dessins annexés.

La figure 1 montre, schématiquement, la relation entre les divers fichiers utilisés par le traitement.

La figure 2 montre la structure des informations de chaque donnée des fichiers de la figure 1.

La figure 3 montre un exemple simplifié de relevé de surface auquel on souhaite appliquer les traitements de l'invention.

La figure 4 montre le contenu des fichiers représentatifs de la surface de la figure 3.

Les figures 5 et 6 illustrent, toujours dans le cas de la surface de la figure 3, la progression de l'algorithme de dichotomie.

La figure 7 montre un exemple d'un ensemble de points appartenant à une courbe devant faire l'objet d'une segmentation et d'un tri.Les figures 8 à 10 illustrent la manière dont les données sont organisées pour permettre l'exécution du tri recherché.

<>

Essentiellement, les données issues du système d'acquisition de la forme, qui se présentent sous forme d'un "nuage" de points indifférencié du point de vue analytique et sans aucune relation d'ordre entre les points, vont être organisées en une base de données dont on va définir le format avec ses primitives d'accès.

Ensuite, on explicitera à propos d'un exemple la manière dont se développe l'algorithme de facettisation des points d'une surface.

Puis on donnera des exemples d'exploitation (affichage partiel et extraction de sections planes) de la surface facettisée par l'opération précédente.

Enfin, dans le cas d'une courbe bidimensionnelle ou tridimensionnelle, on exposera comment on procède à la segmentation et au tri des points représentatifs de cette courbe.

Format de la base de données

Cette base de données, dont la structure générale est illustrée figure 1, est constituée d'un fichier précurseur PREPTS qui contient les points issus du relevé de la forme. Chaque donnée de ce fichier, correspondant à un point, comporte, comme illustré figure 2, les paramètres suivants : coordonnées cartésiennes (X,Y,Z), direction (I,J,K) de la normale à la forme (avec $I^2 + J^2 + K^2 = 1$) et un attribut H susceptible de contenir des indications particulières concernant le point (par exemple, une information de couleur).

A titre illustratif, si chacun des paramètres (X,Y,Z,I,J,K) est sur 4 octets et le paramètre H sur 1 octet, chaque point nécessitera 25 octets, et une surface de 1 million de points nécessitera donc un fichier de 25 Mo. Un tel fichier sera nécessairement stocké sur disque dur, de sorte que le mode d'accès aux informations de ce disque devra être géré de manière optimale pour ne pas ralentir le traitement.

Ce fichier PREPTS est adressé par un fichier d'index IDXPTS constitué de "granules". Un "granule" définit un ensemble de points présentant la caractéristique d'être consécutifs sur le fichier PREPTS. Chaque granule comprend, comme illustré figure 2, l'adresse ADPT du premier point du granule dans le fichier PREPTS suivie du nombre SQPT de points du granule. Ceci permettra de disposer d'un fichier IDXPTS de dimension réduite par rapport à PREPTS car ne comprenant que, pour chaque granule, l'adresse du premier point du fichier PREPTS à accéder, suivie du nombre de points à accéder séquentiellement dans ce même fichier à partir de cette adresse.

Les granules faisant partie d'un même bloc d'index sont écrits séquentiellement dans le fichier IDXPTS et terminés de préférence par un séparateur particulier indicateur de fin de granule, par exemple un bloc (-01,00), qui n'est pas indispensable mais qui permet de retrouver et d'individualiser les granules si on perd, pour une raison ou pour une autre, le fichier des entités ENTIDX.

Le fichier d'index IDXPTS est lui-même adressé par un fichier ENTIDX qui contient les informations analytiques concernant une "entité" qui groupe les points de PREPTS dans un même bloc d'index. Une "entité" sera une facette dans le cas d'une surface, ou un segment de droite dans le cas d'une courbe.

Chaque entité, comme illustré figure 2, comprend l'adresse ADGR du premier granule du bloc d'index dans IDXPTS, le nombre de granules SQGR du bloc d'index, le nombre TOTP de points de PREPTS référencés par l'entité (ceci afin de permettre un contrôle de cohérence qui garantit l'intégrité des données), d'un marqueur de validité VALID et par les informations analytiques (a,b,c etc.) représentatives de l'entité.

Ces équations analytiques sont par exemple les coefficients (a,b,c,d) de l'équation cartésienne du plan [$a.x + b.y + c.z = d$, avec $(a^2 + b^2 + c^2)^{1/2} = 1$)], ou les coefficients (a,b,c,d,e,f) de l'équation paramétrique de la droite portant le segment [$x = a+m.d$, $y = b+m.c$, $z = c+m.f$, où m est le paramètre réel], ou toute autre information analytique si l'entité est d'une autre nature (l'entité pourrait ainsi être une facette sphérique au lieu d'une facette plane, un arc de cercle au lieu d'un segment, etc.).

On dispose ainsi de trois collections de données, à savoir (figure 1) une collection A de points bruts, une collection B de points indexés, et une collection C d'entités (facettes ou segments).

Si l'on prend l'exemple de la surface facettisée de la figure 3 comportant 25 points regroupés (après facettisation) en quatre facettes, le contenu correspondant de la base de données, serait celui illustré figure 4 :

- le fichier ENTIDX comporte quatre blocs, correspondant à quatre facettes ; le premier bloc (00,03,06,...) signifie que la première facette comporte trois granules (SQGR = 03), pour un total de six points (TOTP = 06), commençant à l'adresse 00 du fichier IDXPTS (ADGR = 00), que la deuxième facette comporte trois granules pour un total de quatre points, le premier granule se trouvant à l'adresse 03 du fichier IDXPTS, etc.
- en ce qui concerne le fichier IDXPTS, il indique (premier bloc) que le premier granule comporte quatre points consécutifs (SQPT = 04) commençant à l'adresse 01 du fichier PREPTS (ADPT = 01), c'est-à-dire les points n°1 à n°4 sur la figure 3 et que le second granule de cette même facette comporte deux points commençant à l'adresse 08 (les points n°8 et n°9 de la figure 3) ; suit un granule séparateur (-01,00) suivent les informations relatives à la seconde entité (seconde facette) : deux points commençant à l'adresse 07, puis deux points commençant à l'adresse 11, etc.

- le fichier PREPTS illustre la collection de points obtenus après acquisition des données, pour les 25 points de l'exemple de la figure 3 : sur cette figure, pour aider à la compréhension, les différents points sont cerclés, les granules sont constitués des points cerclés regroupés par des traits pointillés, et les quatre facettes ont été référencées I à IV et délimitées par des traits continus.

Une fois définie cette structure de données, le problème consiste à obtenir les différentes facettes. En effet, au départ, on ne dispose que d'une seule entité dans le fichier ENTIDX, entité constituée du plan moyen du nuage de points. On va alors, par itération et dichotomie, obtenir à partir de cette structure une structure plus fine, en fractionnant l'entité unique en deux entités distinctes, et ainsi de suite.

Les paramètres de cette unique entité sont ADGR = 1, SQGR = n, TOTP = n (n étant le nombre total de points acquis ; n = 25 dans l'exemple ou n = 1 000 000 dans un cas réel typique), et les paramètres du plan moyen du nuage de points (paramètres obtenus par la méthode que l'on exposera plus bas). Aucune facette n'ayant encore été définie, le fichier IDXPTS ne comportera qu'un seul granule, avec, de la même façon, ADPT = 1 et SQPT = n.

La lecture des points d'une entité se fera par exécution de l'algorithme général suivant, présenté en métalangage :

```
Lire ENTITY dans "ENTIDX"
     Positionner "IDXPTS" en ADGR
Répéter
          Lire GRAIN dans "IDXPTS"
          Si SQPT > 0
               Positionner "PREPTS" en ADPT
               Tant que SQPT > 0
                    Lire POINT dans "PREPTS"
                    SQPT : = SQPT - 1
          jusqu'à ADGR<0
```

On notera que les granules faisant partie d'un même bloc d'index ont été écrits séquentiellement dans le fichier IDXPTS, ce qui permet de ne faire dans le fichier PREPTS que des lectures vers l'avant, avec un gain de temps corrélatif important du fait de l'optimisation de l'utilisation des tampons mémoire pour l'accès aux points depuis un disque magnétique.

Facettisation des points d'une surface

Le problème consiste à réaliser une partition topologique du nuage de points qui soit à la fois efficace et rapide.

La première étape de la facettisation consiste, sur un nuage de M points formé de tout ou partie du fichier PREPTS, à régresser un plan approximant le nuage de points par une méthode de moindres carrés.

Ce plan régressé Pr, d'équation ArX + BrY + CrZ = Dr, passera par le centre de gravité G, de coordonnées (XG,YG,ZG), du nuage de points.

On vérifiera alors, dans une seconde étape, si les M points en question vérifient ou non un certain nombre de critères : dans l'affirmative, un bloc d'index sera constitué ; dans la négative, le nuage de M points sera scindé en deux sous-nuages pour chacun desquels on régressera un plan, on vérifiera le respect des critères, etc.

Plus précisément, le critère à vérifier pourra être le critère multiple suivant :

- critère géométrique de flèche maximale Fmax, c'est-à-dire que la distance d'un point quelconque au plan régressé devra être toujours inférieure à Fmax ;
- critère de volume de données, lié à la gestion mémoire : le nombre de points de la facette sera limité à un nombre maximal Mmax, ceci notamment afin que des traitements ultérieurs (affichages, zooming, etc.) puissent être effectués de façon optimale exclusivement en mémoire vive ;

- critère de dimension de facette, lié aux contraintes d'affichage : on impose à celle-ci une dimension maximale Rmax, c'est-à-dire qu'un point quelconque de la facette ne devra pas être éloigné de plus de Rmax du centre de gravité G.

Si ces trois critères sont vérifiés, on considérera que la facette est dans son état définitif, et on la conservera par constitution d'un bloc d'index.

Dans le cas contraire, on scindera en deux le nuage de M points de part et d'autre d'un plan de coupure Pc, d'équation AcX + BcY + CcZ = Dc, qui sera défini comme étant le plan passant par le centre de gravité G, perpendiculaire au plan de régression Pr et qui sera perpendiculaire à la plus grande dimension de la "boîte de clipping", c'est-à-dire du parallélépipède enveloppe de la fraction de surface affichée ou isolée (des variantes de ce dernier critère pouvant éventuellement être envisagées).

On notera que toutes les équations de plan AX + BY + CZ = D sont sous forme normée, c'est-à-dire que $A^2 + B^2 + C^2 = 1$, ce qui permet d'obtenir très aisément tous les renseignements nécessaires de distance, de position par rapport au plan (le signe indiquant le demi-espace correspondant), etc. Plus précisément, le vecteur N (A,B,C) est orthogonal au plan P, la distance MP d'un point M (Xm,Ym,Zm) au plan P est donnée par MP = AXm + BYm + CZm - D et cette distance est signée positivement du côté de N (A,B,C) et négativement de l'autre, ce qui en donne très simplement la latéralisation.

La régression d'un plan Pr sur un nuage de M points se fait en calculant la matrice de covariance [COV] du nuage et en résolvant en (A,B,C,D) le système linéaire :

$$\begin{vmatrix} \sum x^2 & \sum xy & \sum xz & \sum x \\ \sum yx & \sum y2 & \sum yz & \sum y \\ \sum zx & \sum zy & \sum z^2 & \sum z \\ \sum x & \sum y & \sum z & M \end{vmatrix} * \begin{vmatrix} A \\ B \\ C \\ D \end{vmatrix} = \begin{vmatrix} \sum x \\ \sum y \\ \sum z \\ 0 \end{vmatrix}$$

Il n'y a pas de difficulté analytique particulière pour exécuter cet algorithme de facettisation de manière récursive ou itérative. Le problème réside en ce qu'il faudra balayer les points de PREPTS autant de fois qu'il faudra calculer les résidus de distance, ou les covariances, ou latéraliser un point par rapport au plan de coupure. Ceci peut conduire à plusieurs heures de temps d'accès disque. Une mise en oeuvre particulière qui sera exposée plus bas aura pour but de ramener ce temps au strict nécessaire.

On peut écrire le coeur de l'algorithme dans une première version où CUT est un indicateur qui mentionnera en fin de balayage du nuage de points s'il faut le couper en deux ou non :

```
CUT:=FAUX;
M:=0;        M1:=0;      M2:=0;
ΣX1=0;       ΣY1=0;      ΣZ1=0;
ΣX1²=0;      ΣY1²=0;     ΣZ1²=0;
ΣXY1=0;      ΣYZ1=0;     ΣZX1=0;
ΣX2=0;       ΣY2=0;      ΣZ2=0;
ΣX2² =0;     ΣY2² =0;    ΣZ2² =0;
ΣXY2=0;      ΣYZ2=0;     ΣZX2=0;
Répéter
   Lire Point dans "PREPTS"
   M:=M+1;
   Si M>Mmax alors CUT:=VRAI
   Si ArX + BrY + CrZ - Dr > Fmax alors CUT:=VRAI
   Si AcX + BcY + CcZ - Dc> 0 alors
     ΣX1=ΣX1+X;            ΣY1=ΣY1+Y;            ΣZ1=ΣZ1+Z;
     ΣX1²=ΣX1²+X*X;        ΣY1²=ΣY1²+Y*Y;        ΣZ1²=ΣZ1²+Z*Z;

    ΣXY1=ΣXY1+X*Y;  ΣYZ1=ΣYZ1+Y*Z;  ΣZY1=ΣZX1+Z*X;
    M1=M1+1;
 Sinon
    ΣX2=ΣX2+X;            ΣY2=ΣY2+Y;             ΣZ2=ΣZ2+Z;
    ΣX2² =ΣX2² +X*X;  ΣY2² =ΣY2² +Y*Y;  ΣZ2² =ΣZ2² +Z*Z;
    ΣXY2=ΣXY2+X*Y;  ΣYZ2=ΣYZ2+Y*Z;  ΣZY2=ΣZX2+Z*X;
    M2=M2+1;
 Jusqu'à fin du bloc d'index
Si CUT = VRAI alors
   calculer (Pr1, Pc1, G1)
   calculer (Pr2, Pc2, G2)
```

Tout le calcul des résidus, des covariances et de la latéralisation sera fait en une seule passe sur un nuage de points. Pour cela, on entre dans l'algorithme avec les plans Pr0, Pc0 et le centre de gravité G0 déjà connus. On vérifie que les résidus par rapport à Pr respectent ou non les critères (Fmax,Rmax,Mmax). On attribue à chaque point la latéralisation par rapport à Pc0 qu'il lui faudra si on doit couper le nuage de points.

Simultanément, on somme les termes des deux covariances [COV1] et [COV2] des deux nuages résultants en fonction de la latéralisation des points. Ces deux matrices [COV1] et [COV2] auront été initialisées avant le balayage du nuage de points. Enfin, si les critères sur Pr0 ne sont pas respectés, il suffit de calculer les entités facettes attachés à chaque nuage résultant (Pr1,Pc1,G1) et (Pr2,Pc2,G2) et de les traiter comme Pr0. Si les critères sont vérifiés sur Pr0, la facette est valide et peut être écrite dans ENTIDX, le nuage de points pouvant constituer le bloc d'index associé dans IDXPTS.

On notera que les algorithmes développés sont tous basés sur un calcul de covariance et de régression linéaire, qui ne nécessitent pas la connaissance a priori d'une relation d'ordre entre les points, et qui opère de façon globale et non locale, permettant ainsi une progression optimale de la dichotomie.

Gestion pratique des données

Pour la mise en oeuvre pratique, et afin d'utiliser, comme évoqué plus haut, le maximum de mémoire dynamique disponible, on va maintenant décrire un mode particulier de gestion du flux de données particulièrement avantageux.

A cet effet, et de manière en elle-même connue, les points et les entités sont chargés par allocation de pointeurs de noeuds (NOD), pointant sur les points, et de pointeurs de liste (LST), pointant sur les entités et gérant le chaînage des noeuds. En d'autres termes, on ajoute à chaque point une information de pointeur, ce pointeur pointant sur le point suivant de la facette.

L'allocation d'une partie de la mémoire dynamique en "tas" (heap) - par opposition à la "pile" (stack) - sera notée par la procédure NEW et sa libération, par FRE. Chaque noeud contient un champ SUITE de type pointeur sur le noeud suivant de la liste.

Chaque liste comprend un pointeur PREMIER qui pointe sur le premier noeud attaché à la liste. Une liste représente une entité (une facette par exemple) et un noeud représente un point (X,Y,Z,I,J,K,H).

Au fur et à mesure de la lecture des points sur PREPTS, ceux-ci sont chaînés en liste sur le tas. Le tas se comporte comme un tampon circulaire, c'est-à-dire que, lorsqu'il n'y a plus de place en mémoire dynamique, les listes, s'il faut les recouper, sont sauvées sous forme de blocs d'index dans des fichiers temporaires. Sinon, elles sont sauvées sous forme de blocs d'index dans le fichier d'index résultat. En résumé, on remarquera que, si la liste tient entièrement sur le tas, l'arbre binaire de dichotomie s'exécute par récursivité descendante (c'est-à-dire en profondeur d'abord) et que, à l'inverse, si la liste ne tient pas sur le tas elle doit être sauvée dans des fichiers temporaires au cours du balayage des noeuds.

La dichotomie de la liste se poursuit, les fichiers temporaires concaténés servant de nouveau fichier d'entité source ; l'algorithme se déroule alors de façon itérative sur des fichiers d'entités intermédiaires (c'est-à-dire en largeur d'abord).

En d'autres termes, lorsque le tas est plein, on écrit sur fichier disque une partie des informations du tas et on réécrit de nouvelles valeurs sur les anciens points ; on notera que les informations sauvegardées sont des granules, c'est-à-dire des blocs d'index, qui sont compatibles avec la structure des bases de données d'entrée.

Cette caractéristique permet une itération aisée, par une procédure réentrante dont les blocs d'entrée et de sortie ont même forme.

A titre illustratif, on va appliquer les enseignements ci-dessus à l'exemple de la base de données de 25 points correspondant à la surface de la figure 3, puis on donnera l'algorithme applicable dans le cas général.

On supposera, par exemple, que l'on dispose d'un tas pouvant contenir onze points, sans tenir compte de la place occupée par les entités (facettes).

Ainsi, comme illustré sur la figure 5, dans l'état initial des fichiers :

IDXPTSO représente le fichier d'index source,

IDXPTSG et IDXPTSD représentent les fichiers d'index temporaires des points à gauche et à droite du plan de coupure, et

IDXPTSR représente le fichier d'index résultat de la facettisation.

Par rapport à la figure 3, $P_0$ représente la première coupure, $P_A$ et $P_B$ représentent les deux coupures suivantes. On retrouvera alors les quatre entités ou facettes référencées I,II,III,IV.

L'exécution de la passe n°0 (première passe) a lieu de la manière suivante.

Les tableaux d'occupation mémoire de la figure 5 illustrent le déroulement de l'algorithme (les lettres a, b, c en marge des tableaux indiquant les étapes auxquelles sont inscrites les données en regard). Le fichier d'index initial IDXPTS0 comprend un seul granule de 25 points contigus. Les adresses mémoires sont référencées de 01 à 11 pour les 11 places disponibles sur le tas. Les signes + ou - indiquent de quel coté du plan de coupure se trouve le point considéré dans la liste :

(a) Au chargement du point suivant le point n°10 (c'est-à-dire le point n°11), le tas est plein. Ceci engendre une vidange de la liste à laquelle est attachée le point 11 ("11-" signifiant : "à gauche du plan P0") dans le fichier temporaire IDXPTSG de la liste gauche, point 11 non compris. A l'issue de cette sauvegarde, les adresses mémoire 1,2,3,4,6,7,8,9 sont libres. Le point 12 sera chargé en adresse 01 qui est la première libre.

(b) Au chargement du point 19, la liste droite sature le tas et engendre donc une sauvegarde dans IDXPTSD des points 5,10,13,14,15,16,17,18, le point 19 restant sur le tas. Le point 20 prendra la première adresse libre, c'est-à-dire la 02.

(c) Le dernier point 25 étant chargé, les listes gauche (-) et droite (+) sont respectivement sauvées en IDXPTSG et IDXPTSD des points 11 à 12 et des points 19 à 25. Les blocs d'index sont terminés par le séparateur (-01,00).

L'exécution de la passe n°1 (deuxième passe) a lieu de la manière suivante.

Les fichiers IDXPTSG et IDXPTSD sont concaténés et constituent un nouveau fichier IDXPTS0 sur lequel s'applique le même traitement. Ici le fichier IDXPTSD ne sera pas sollicité, des facettes résultat iront s'écrire dans le fichier final IDXPTSR. Les tableaux d'occupation mémoire correspondants sont illustrés en figure 6.

(d) La première liste est chargée en mémoire uniquement, coupée en deux et va directement dans le fichier résultat IDXPTSR sous forme de deux listes filles. Le tas est libéré. Le processus reprend avec la deuxième facette temporaire coupée par le plan $P_B$.

(e) Au point 21, le tas est saturé. Le point appartient à la liste droite (+) qui est donc sauvée temporairement dans IDXPTSD pour les points 16,17,18. L'adresse 6 est la première libre.

(f) La liste droite sature à nouveau en provoque la sauvegarde des points 21,22,23. L'adresse 6 est la première libre.

(g) Le processus est terminé. La liste droite (+) est clôturée dans IDXPTSD. La liste gauche (-) des points (5,10,13,14,15,19, 20,25) est demeurée sur le tas et va directement dans le fichier résultat IDXPTSR.

L'exécution de la passe n°2 (troisième passe) a lieu de la manière suivante : IDXPTSD devient le fichier source IDXPTS0. Comme il contient une facette qui respecte les critères, les index sont recopiés dans IDXPTSR directement. La procédure de recopie assure la concaténation de granules adjacents inutiles tels que (21,3) (24,1) résultant de la sauvegarde temporaire des listes. On obtient finalement la base de données présentée en figure 4.

Cet exemple partiel peut être aisément généralisable à la facettisation d'un fichier d'un nombre quelconque de points, ce qui donne l'algorithme suivant :

```
Tant que taille source <> 0
        Tant que pas fin fichier source
            Allouer une liste NEW(LST0)
            Lire une entité en 0
            Si critère pas vérifié alors
                Attacher un point (X,Y,Z,I,J,K,H)
                SUBDIVISE(LST0)
            Sinon
                Ecrire l'entité en fichier résultat
                Recopier le bloc index en résultat
        Fin tant que
        Concaténer les fichiers temporaires 1 et 2 dans 0
    Fin tant que

Proc SUBDIVISE (LST0)
Si la liste tient sur le tas
    New (LST1)
    New (LST2)
    Si COUPE (LST0, LST1, LST2)
        SUBDIVISE (LST1)
        SUBDIVISE (LST2)
FRE (LST0)
```

Exemples d'exploitation de la surface facettisée

On va maintenant décrire deux exemples typiques d'exploitation des données, à savoir un affichage partiel en temps réel de la surface facettisée et l'extraction de sections planes quelconques.

En ce qui concerne l'exploitation des données, d'autres types d'opérations sont envisageables, par exemple le lissage des points relevés, qui revient à régresser localement un plan sur un point central et ses voisins, le point central étant dans ce cas remplacé par sa projection sur le plan de régression.

Premier exemple d'exploitation de la surface facettisée

Un premier exemple, très simple à mettre en oeuvre grâce à la structure des données obtenues, consiste à réaliser un affichage partiel de la surface facettisée, cette manipulation étant réalisée de façon interactive par l'opérateur.

A cet effet, l'opérateur doit agrandir (zoomer) sa fenêtre de visualisation en perspective à l'écran, fenêtre qui sera définie par une "boite de clipping" parallélépipédique (Xmin,Ymin,Zmin,Xmax, Ymax, Zmax).

Chaque facette étant chargée, il suffit de vérifier si la sphère de centre (XG, YG, ZG), c'est-à-dire centrée au centre de gravité de la facette, et de rayon Rmax intercepte la boite de clipping. Dans l'affirmative les points de PREPTS sont affichés s'ils sont dans la fenêtre. Sinon, la facette est rejetée directement, sans perte de temps. L'algorithme est le suivant :

```
Afficher base de données
(Xmin,Ymin,Zmin,Xmax,Ymax,Zmax)

    Tant que pas fin de ENTIDX
        Lire une facette (Xg,Yg,Zg,Rmax)
        Si XG-XMAX  < RMAX
           Xmin-XG  < RMAX
           YG-YMAX  < RMAX
           Ymin-YG  < RMAX
           ZG-ZMAX  < RMAX
           Zmin-ZG  < RMAX
        alors
            positionner IDXPTS en ADGR
            pour SQ = 1 jusqu'à SQGR
                lire ADPT, SQPT dans IDXPTS
                positionner PREPTS en ADPT
                pour PT=1 jusqu'à SQPT
                    lire un point (X,Y,Z) dans PREPTS
                    si  Xmin < X < Xmax
                        Ymin < Y < Ymax
                        Zmin < Z < Zmax
                    alors afficher le point (X,Y,Z)
                Fin pour
            Fin pour
        Fin Si
    Fin tant que
```

Second exemple d'exploitation de la surface facettisée

Un second exemple d'exploitation est l'extraction de sections planes quelconques, utilitaire très fréquemment utilisé en CAO.

Il s'agit d'extraire des courbes plane d'intersection de la forme avec un plan Ps d'équation AsX + BsY + CsZ = Ds.

Pour cela on lit séquentiellement le fichier ENTIDX. Si la facette est distante du plan de plus de Rmax, elle est rejetée. Sinon, les points sont lus dans le fichier PREPTS et retenus s'ils se trouvent à une distance du plan Ps inférieure à une valeur donnée

L'algorithme est le suivant :

```
Extraire une section (As, Bs, Cs, Ds, ε)
    Tant que pas fin de ENTIDX
        Lire une facette XG, YG, ZG, Rmax
        Si |AsYg + BsYg + CsZg - Ds| < Rmax
        Alors
            Positionner IDXPTS en ADGR
            Pour SQ = 1 jusqu'à SQGR
                Lire ADPT, SQPT dans IDXPTS
                Pour PT = 1 jusqu'à SQPT
                    Lire un point (X,Y,Z) dans PREPTS
                    Si |AsX + BsY + CsZ - Ds| < ε
                    Alors stocker le point pour CAO
                Fin Pour
            Fin Pour
        Fin Si
    Fin Tant que
```

Les points stockés pour la CAO seront ensuite triés suivant l'abscisse curviligne de la courbe qu'ils constituent en utilisant l'algorithme de tri que l'on va maintenant exposer.

Segmentation et tri des points d'une courbe

Lorsque l'on cherche à exploiter un ensemble de points supposés décrire une certaine courbe dans l'espace, on a généralement besoin d'accéder aux points "dans l'ordre". Pour usiner une trajectoire, par exemple, on donne à la commande numérique une suite de points "consécutifs" à parcourir par la fraise. De même, pour calculer une courbe paramétrée polynomiale approximant une certaine liste de points, le calculateur peut avoir besoin de connaître l'ordre par lequel la courbe doit décrire les points de la liste, lorsque le paramètre varie dans un sens donné.

Sur une CAO, quand la liste se limite à une dizaine de points, c'est l'opérateur qui attribue leur ordre aux points en fonction de la courbe qu'il désire voir apparaître à l'écran, la mise en ordre des points se faisant de façon interactive en fonction du résultat désiré.

Cette manière de procéder n'est pas envisageable lorsque l'on est en présence de milliers ou de millions de points représentatifs d'une surface à reproduire. Pour réaliser par exemple une copie usinée de cette surface, on extrait de ce million de points un grand nombre de sections, qui vont représenter des trajectoires à parcourir par l'outil de la fraiseuse. On se retrouve dans ce cas avec par exemple 1000 sections contenant chacune 1000 points. Il serait inconcevable de demander à l'opérateur de définir l'ordre des points dans ces sections.

L'"ordre" des points est, ici, choisi comme étant défini par l'abscisse curviligne de la courbe approximant au mieux la liste de points. Quand la précision et le nombre des points sont suffisants pour représenter la courbe de façon unique, cette définition répond bien aux problèmes d'usinage et de calcul de courbes paramétrées. L'algorithme de tri de sections décrit ci-dessous utilise le principe de dichotomie récursive pour trier les points d'une courbe selon cet ordre d'abscisse curviligne.

Essentiellement, le nuage de points à trier est d'abord découpé jusqu'à ce que chaque tronçon soit approximable par une droite, les points d'un tronçon sont ensuite triés localement suivant l'abscisse de leur projection sur cette droite, et il ne reste plus qu'à orienter et relier les tronçons entre eux pour obtenir la suite de points triés sur la courbe.

En ce qui concerne la segmentation, on peut globalement considérer que l'algorithme appliqué est le même que celui de la facettisation. Cependant, au lieu de calculer par régression linéaire au sens des moindres carrés des plans approximant le nuage de points, on calculera des équations de droites qui approximeront la courbe par une succession de segments de droites respectant un critère de flèche fixé.

Ce procédé est illustré par la figure 7, qui montre un exemple de répartition des segments régressés et des droites de coupure.

On notera que la méthode s'applique aussi bien à des courbes planes 2D qu'à des courbes gauches 3D.

L'algorithme de tri est appliqué à une structure de listes chaînées d'entités ("points" ou "segments"), utilisant les trois principes de chaînage suivants :

(1) les listes sont chaînées dans les deux sens. Chaque entité connaît ses deux "voisins", l'entité suivante et l'entité précédente de la liste : chaque entité, point ou segment, contient donc (figure 8) deux pointeurs, baptisés "Lnk_Prev" et "Lnk_Next", assurant le chaînage des listes (lien au précédent, lien au suivant) ;

(2) les listes sont bouclées : l'entité suivante de la dernière entité est la première entité de la liste, et inversement (figure 9) ;

(3) le point est l'entité de plus bas niveau, il n'a pas de "descendants" ; le segment, outre ses voisins suivants et précédents, pointe sur la première et la dernière entité d'une liste "fille", composée de points ou de segments.

A partir de ces trois principes, on peut déjà constituer les deux types d'entités :

Le type POINT contient :

Lnk_Next : adresse du point suivant dans la liste de points
Lnk_Prev : adresse du point précédent dans la liste de points
X,Y,Z : les coordonnées du point

Le type SEGMENT contient :

Lnk_Next : adresse du segment suivant de la liste de segments
Lnk_Prev : adresse du segment précédent de la liste de segments
Def_First: adresse du premier point ou sous-segment
Def_Last : adresse du dernier point ou sous-segment

Les deux types d'entités sont ainsi hiérarchisées de la manière illustrée figure 10.

Par ailleurs, on pourra être amené à compléter les entités ci-dessus selon les besoins de l'algorithme de tri par les données analytiques associées (c'est-à-dire les équations des segments de droite).

## Revendications

**1.** Un procédé de traitement de données infographiques obtenues après acquisition d'une surface 3d, ces données, représentatives de points de la surface, constituant un ensemble non ordonné et indéterminé du point de vue analytique, ce procédé consistant à regrouper topologiquement les points en une pluralité de facetes distinctes, déterminées du point de vue analytique et répondant chacune à un critère prédéterminé,

procédé comportant les étapes consistant à :

(a) créer une structure de données comportant au moins, d'une part, un premier fichier contenant les données représentatives de l'ensemble des points de la surface et, d'autre part, un second fichier qui recevra les données de facettes qui auront été élaborées au cours de l'exécution du procédé,

(b) régresser un plan approximant l'ensemble de points du premier fichier,

(c) examiner si ce plan régressé vérifie ledit critère prédéterminé, ce critère prédéterminé comportant au moins un critère de distance maximale de chaque point au plan régressé,

(d) dans l'affirmative, créer dans le second fichier une donnée de facette, contenant les données analytiques du plan régressé correspondant, caractérisé en ce que :

(e) dans la négative, le procédé comporte une étape consistant à scinder l'ensemble des points considéré en deux sous-ensembles répartis de part et d'autre d'un plan de coupure, et exécuter de façon dichotomique, itérative ou récursive les étapes (b) à (d) pour chacun de ces sous-ensembles.

**2.** Le procédé de la revendication 1, caractérisé en ce que le critère prédéterminé comporte en outre un critère de nombre maximal de points de l'ensemble.

**3.** Le procédé de la revendicationl, caractérisé en ce que le critère prédéterminé comporte en outre un critère de dimensions maximale de la facette correspondant à l'ensemble de points.

4. Le procédé de la revendication 1, caractérisé en ce que le plan de coupure est un plan passant par le centre de gravité de l'ensemble de points à scinder et perpendiculaire au plan régressé.

5. Le procédé de la revendication 1, caractérisé en ce que dans le premier fichier, chaque donnée de point contient en outre une information de pointeur pointant sur le point suivant de la facette, de manière à permettre un chaînage en liste des points dans une zone mémoire allouable et libérale dynamiquement, les listes étant sauvegardées sous forme de fichiers temporaires en cas de saturation de ladite zone.

6. Un procédé de traitement de données infographiques obtenues après acquisition sans contact d'une courbe 2D ou 3D, ces données, représentatives de points de la courbe, constituant un ensemble non ordonné et indéterminé du point de vue analytique, ce procédé consistant à regrouper topologiquement les points en une pluralité de segments distincts, déterminés du point de vue analytique et répondant chacun à au moins un critère prédéterminé,

procédé comportant les étapes consistant à :

(a) créer une structure de données comportant au moins, d'une part, un premier fichier contenant les données représentatives de l'ensemble des points de la courbe et, d'autre part, un second fichier qui recevra les données de segment qui auront été élaborées au cours de l'exécution du procédé,

(b) régresser une droite approximant l'ensemble de points du premier fichier,

(c) examiner si cette droite régressée vérifie ledit critère prédéterminé, ce critère prédéterminé comportant au moins un critère de distance maximale de chaque point à la droite régressée,

(d) dans l'affirmative, créer dans le second fichier une donnée de segment, contenant les données analytiques du segment régressé correspondant, caractérise en ce que :

(e) dans la négative, scinder l'ensemble des points considéré en deux sous-ensembles répartis de part et d'autre d'une coupure, et exécuter de façon itérative ou récursive les étapes (b) à (d) pour chacun de ces sous-ensembles.

7. Le procédé de la revendication 6, caractérisé en ce qu'il comprend outre une étape complémentaire consistant, après achèvement de l'ensemble des itérations des étapes (b) à (d) à:

(e) trier localement les points de chaque segment suivant l'abscisse de leur projection sur ce segment, puis orienter et relier entre eux les segments pour ordonner entre eux, globalement, l'ensemble des points de la courbe.

8. Le procédé de la revendication 1 ou de la revendication 6, caractérisé en ce que, à l'étape (a), on crée en outre un troisième fichier indexant le premier fichier et contenant des données représentatives de granules groupant chacun une pluralité de points consécutifs du premier fichier.

FIG_1

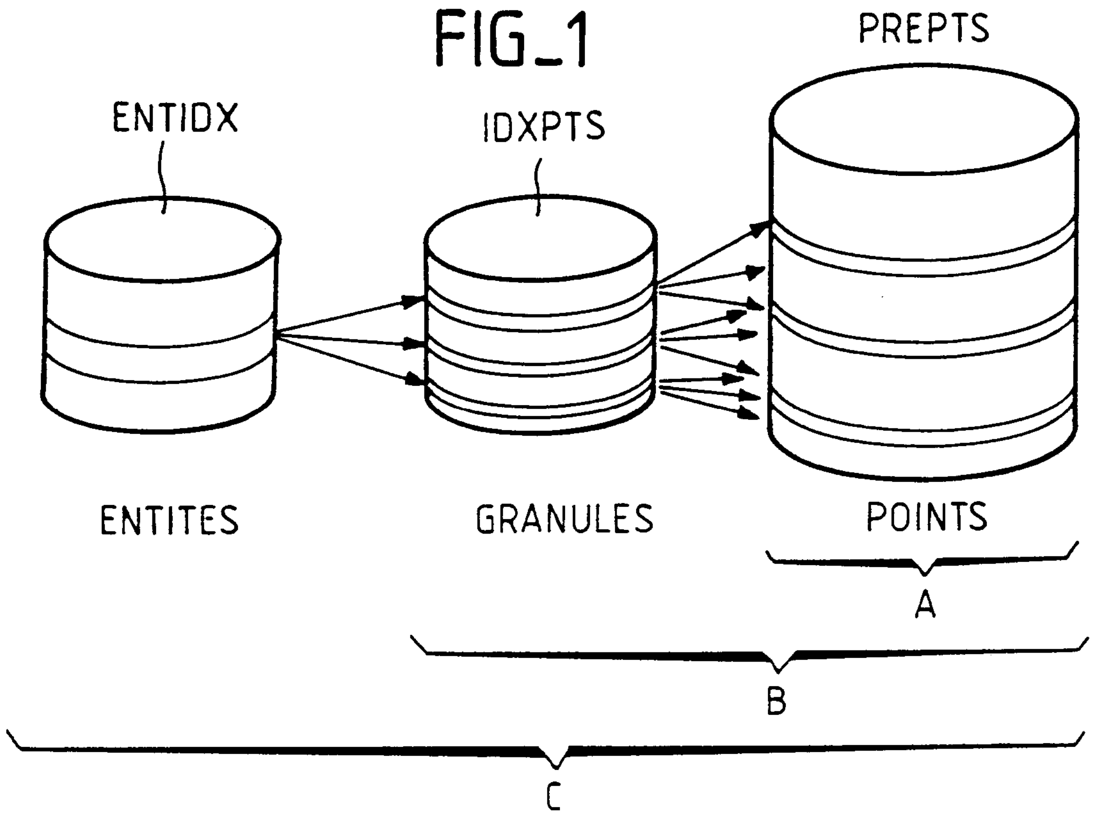
PREPTS
ENTIDX
IDXPTS
ENTITES
GRANULES
POINTS
A
B
C

FIG_2

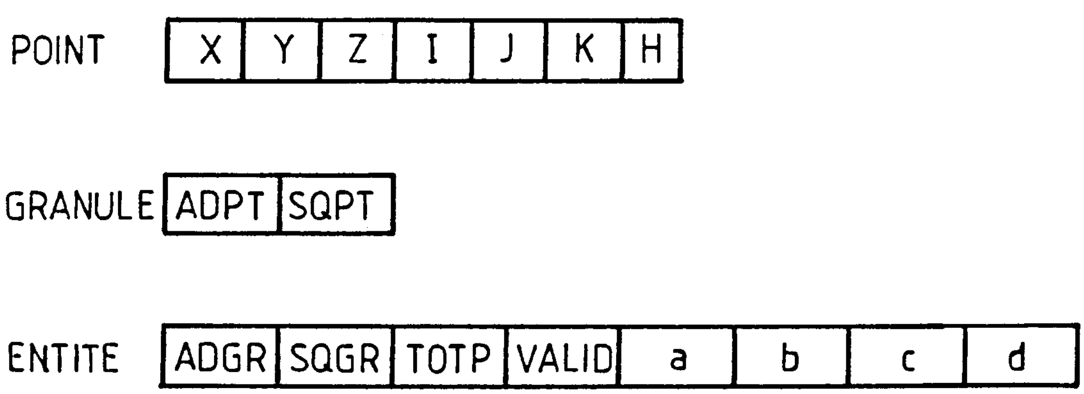
POINT
X
Y
Z
I
J
K
H
GRANULE
ADPT
SQPT
ENTITE
ADGR
SQGR
TOTP
VALID
a
b
c
d

FIG_3

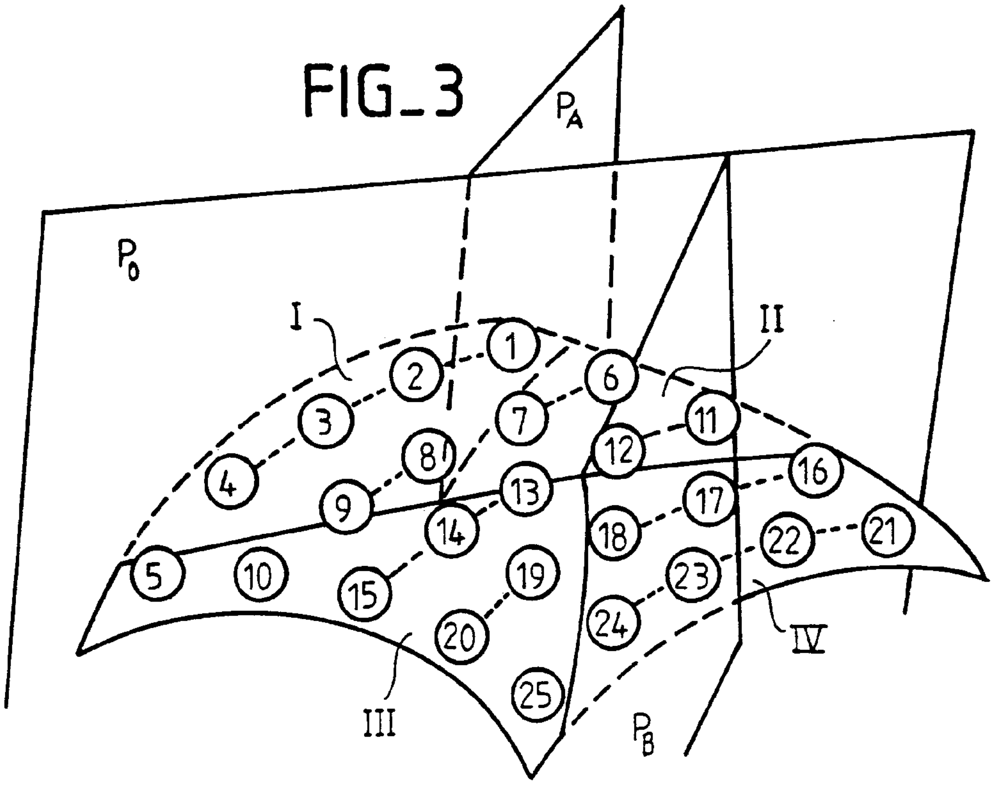


ENTIDX

| @@ | ADGR | SQGR | TOTP.... | |
|---|---|---|---|---|
| 00 | 00 | 03 | 06 | --- |
| 01 | 03 | 03 | 04 | --- |
| 02 | 06 | 06 | 08 | --- |
| 03 | 12 | 03 | 07 | --- |

IDXPTS

| @@ | ADPT | SQPT | |
|---|---|---|---|
| 00 | 01 | 04 | I |
| 01 | 08 | 02 | I |
| 02 | -01 | 00 | |
| 03 | 06 | 02 | II |
| 04 | 11 | 02 | II |
| 05 | -01 | 00 | |
| 06 | 05 | 01 | III |
| 07 | 10 | 01 | III |
| 08 | 13 | 03 | III |
| 09 | 19 | 02 | III |
| 10 | 25 | 01 | III |
| 11 | -01 | 00 | |
| 12 | 16 | 03 | IV |
| 13 | 21 | 04 | IV |
| 14 | -01 | 00 | |

PREPTS

| @@ | XYZ IJK H |
|---|---|
| 00 | vide |
| 01 | I |
| 02 | I |
| 03 | I |
| 04 | I |
| 05 | III |
| 06 | II |
| 07 | II |
| 08 | I |
| 09 | I |
| 10 | III |
| 11 | II |
| 12 | II |
| 13 | III |
| 14 | III |
| 15 | III |
| 16 | IV |
| 17 | IV |
| 18 | IV |
| 19 | III |
| 20 | III |
| 21 | IV |
| 22 | IV |
| 23 | IV |
| 24 | IV |
| 25 | III |

FIG_4

# FIG_5

**IDXPTSO**

| @@ | ADPT | SQPT |
|---|---|---|
| 00 | 01 | 25 |
| 01 | -01 | 00 |

**MEMOIRE**

| @@ | (a) | (b) | (c) |
|---|---|---|---|
| 01 | 01- | 12- | |
| 02 | 02- | 13+ | 20+ |
| 03 | 03- | 14+ | 21+ |
| 04 | 04- | 15+ | 22+ |
| 05 | 05+ | | 23+ |
| 06 | 06- | 16+ | 24+ |
| 07 | 07- | 17+ | 25+ |
| 08 | 08- | 18+ | |
| 09 | 09- | 19+ | |
| 10 | 10+ | | |
| 11 | 11- | | |

**IDXPTSG**

| @@ | ADPT | SQPT | |
|---|---|---|---|
| 00 | 01 | 04 | (a) |
| 01 | 06 | 04 | (a) |
| 02 | 11 | 02 | (c) |
| 03 | -01 | 00 | (c) |

**IDXPTSD**

| @@ | ADPT | SQPT | |
|---|---|---|---|
| 00 | 05 | 01 | (b) |
| 01 | 10 | 01 | (b) |
| 02 | 13 | 06 | (b) |
| 03 | 19 | 07 | (c) |
| 04 | -01 | 00 | (c) |

# FIG_6

**IDXPTSO**

| @@ | ADPT | SQPT |
|---|---|---|
| 00 | 01 | 04 |
| 01 | 06 | 04 |
| 02 | 11 | 02 |
| 03 | -01 | 00 |
| 04 | 05 | 01 |
| 05 | 10 | 01 |
| 06 | 13 | 06 |
| 07 | 19 | 07 |
| 08 | -01 | 00 |

**MEMOIRE**

| @@ | (d) | (e) | (f) | (g) |
|---|---|---|---|---|
| 01 | 01- | 05- | | |
| 02 | 02- | 10- | | |
| 03 | 03- | 13- | | |
| 04 | 04- | 14- | | |
| 05 | 06+ | 15- | | |
| 06 | 07+ | 16+ | 22+ | 25- |
| 07 | 08- | 17+ | 23+ | |
| 08 | 09- | 18+ | 24+ | |
| 09 | 11+ | 19- | | |
| 10 | 12+ | 20- | | |
| 11 | | 21+ | | |

**IDXPTSR**

| @@ | ADPT | SQPT | |
|---|---|---|---|
| 00 | 01 | 04 | (d) |
| 01 | 08 | 02 | (d) |
| 02 | -01 | 00 | (d) |
| 03 | 06 | 02 | (d) |
| 04 | 11 | 02 | (d) |
| 05 | -01 | 00 | (d) |
| 06 | 05 | 01 | (g) |
| 07 | 10 | 01 | (g) |
| 08 | 13 | 03 | (g) |
| 09 | 19 | 02 | (g) |
| 10 | 25 | 01 | (g) |
| 11 | -01 | 00 | (g) |

**IDXPTSD**

| @@ | ADPT | SQPT | |
|---|---|---|---|
| 00 | 16 | 03 | (e) |
| 01 | 21 | 03 | (f) |
| 02 | 24 | 01 | (g) |
| 03 | -01 | 00 | (g) |

FIG_7

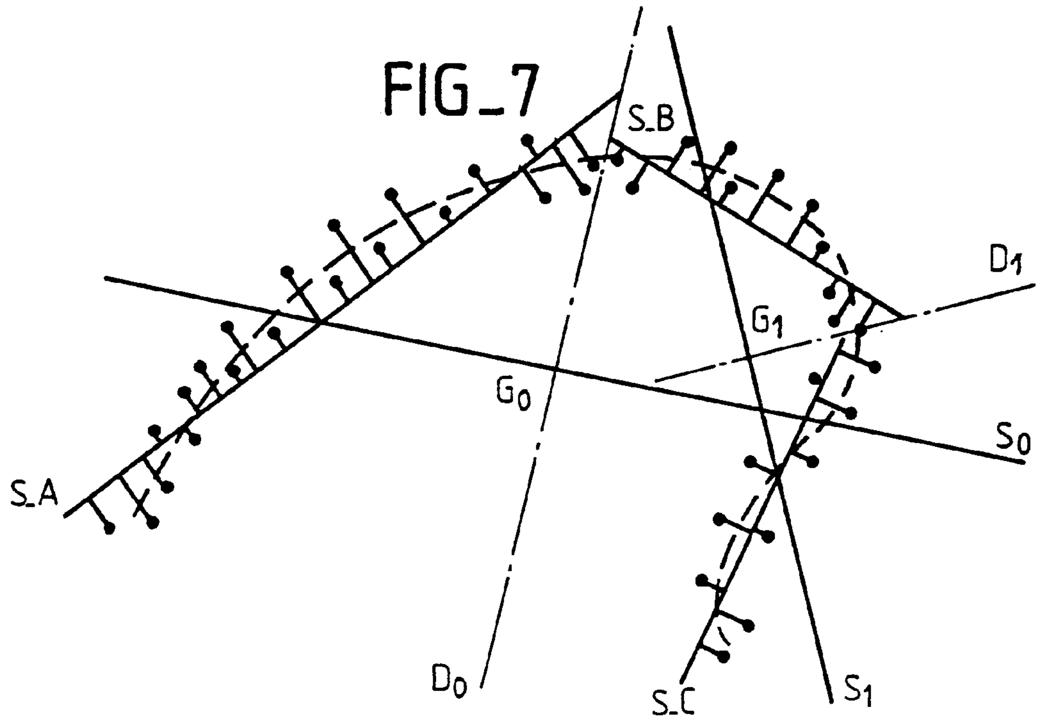


FIG_8

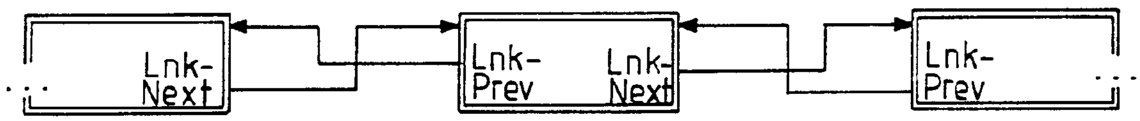


FIG_9

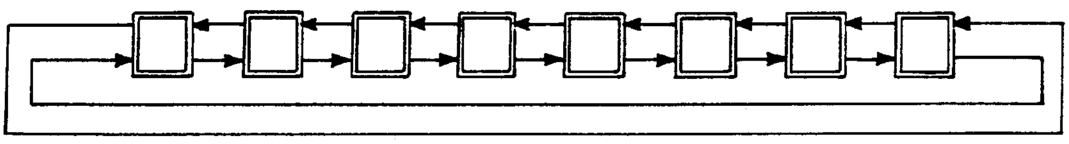

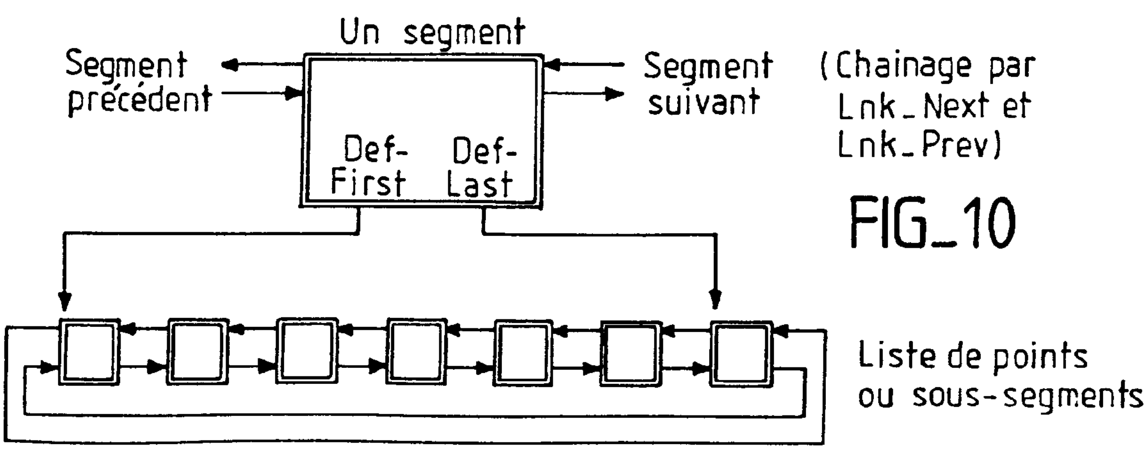


(Chainage par Lnk_Next et Lnk_Prev)

FIG_10

Office européen des brevets

# RAPPORT DE RECHERCHE EUROPEENNE

Numero de la demande
EP 93 40 2208

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | COMPUTER AND GRAPHICS<br>vol. 15, no. 2 , 1991<br>pages 175 - 184<br>M. DEHAEMER ET AL. 'Simplification of objects rendered by polygonal approximation' | 1-3,6 | G06F15/72 |
| A | * page 177, colonne de gauche, ligne 8 - page 179, colonne de gauche, ligne 21 *<br>* page 181, colonne de gauche, ligne 1 - ligne 28 *<br>--- | 4,5,7,8 | |
| X | PROC. IEE COMP. SOC. CONF. ON COMPUTER VISION AND PATTERN RECOGNITION Juin 1983 , SILVER SPRING, MD, USA<br>pages 8 - 13<br>O.D. FAUGERAS ET AL., 'Segmentation of range data into planar and quadratic patches' | 1-3,6 | |
| A | * page 8, colonne de droite, ligne 4 - ligne 12 *<br>* page 9, colonne de gauche, ligne 44 - colonne de droite, ligne 4 *<br>----- | 4,5,7,8 | |

DOMAINES TECHNIQUES RECHERCHES (Int.Cl.5)

G06F

Le présent rapport a été établi pour toutes les revendications

| Lieu de la recherche | Date d'achèvement de la recherche | Examinateur |
|---|---|---|
| LA HAYE | 27 Octobre 1993 | PIERFEDERICI, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)